# EUROPÄISCHE PATENTSCHRIFT

(11) **EP 0 874 871 B1**
(45) Veröffentlichungstag und Bekanntmachung des Hinweises auf die Patenterteilung: **08.09.1999**
(21) Anmeldenummer: 97900605.3
(22) Anmeldetag: 16.01.1997
(51) Int. Cl.: C08J 3/03, C08J 3/12, C04B 24/26, C08L 33/08, C08L 33/10, C08L 35/00

(54) **REDISPERGIERBARE POLYMERISATPULVER UND DARAUS ERHÄLTLICHE WÄSSRIGE POLYMERISAT-DISPERSIONEN**
RE-DISPERSIBLE POLYMER POWDER AND AQUEOUS POLYMER DISPERSIONS OBTAINED FROM IT
POUDRE POLYMERE REDISPERSABLE ET DISPERSIONS POLYMERES AQUEUSES OBTENUES A PARTIR DE CELLE-CI

(30) Priorität: 18.01.1996 DE 19601699
(43) Veröffentlichungstag der Anmeldung: 04.11.1998
(73) Patentinhaber: Wacker-Chemie GmbH, 81737 München (DE)
(72) Erfinder: FIGGE, Reiner, D-84539 Ampfing (DE); ZEH, Harald, D-84489 Burghausen (DE); WEISSGERBER, Rudolf, D-84489 Burghausen (DE)
(74) Vertreter: Schuderer, Michael, Dr.
(86) Internationale Anmeldenummer: EP9700171
(87) Internationale Veröffentlichungsnummer: WO9726295

(56) Entgegenhaltungen:
- US-A- 4 859 751
- US-A- 5 342 897

## Beschreibung

Die Erfindung betrifft redispergierbare Polymerisatpulver auf der Basis eines Gemisches aus wasserunlöslichem, filmbildendem Polymerisat und eines wasserlöslichen VerdüsungsSchutzkolloids, welches durch pH-Änderung desaktiviert werden kann. Weiter betrifft die Erfindung mit dem Polymerisatpulver herstellbare wäßrige Dispersionen.

Dispersionspulver werden seit vielen Jahren insbesondere im Bausektor zur Kunststoffvergütung von hydraulisch abbindenden Systemen sowie in Putzen, Farben und Klebemitteln eingesetzt. Durch den Zusatz oder die Verwendung von redispergierbaren Kunststoffpulvern in solchen Systemen, werden wesentliche Verbesserungen in den Eigenschaften Haftung, Abriebsbeständigkeit, Kratzfestigkeit und Biegezugfestigkeit erzielt. Der große Vorteil von Dispersionspulvern gegenüber den gleichfalls alternativ einsetzbaren flüssigen Polymerdispersionen ist unter anderem eine hohe Lagerbeständigkeit ohne Konservierungsmittel-Zusätze sowie die Frostbeständigkeit der pulverförmigen Trockenmischungen.

Die bisher bekannten Dispersionspulver enthalten wasserlösliche Verdüsungsschutzkolloide, welche der zu trocknenden Polymerdispersion in der Regel vor dem Sprühtrocknen zugesetzt werden, und die ein frühzeitiges Verfilmen des dem Dispersionspulver zugrundeliegenden Basispolymerisats, beispielsweise während der Sprühtrocknung, verhindern sollen und die Redispergierung des Polymerisatpulvers in Wasser ermöglichen.

Überwiegend werden dazu Polyvinylalkohole als Schutzkolloide eingesetzt. Beispiele hierfür sind etwa in der DE-A 4030638 (US-A 5118751) und in der EP-A 149098 (US-A 4859751) beschrieben. Dispersionspulver, welche als Verdüsungsschutzkolloide wasserlösliche Salze von Phenolsulfonsäure-Formaldehyd-Kondensaten enthalten, sind aus der EP-A 407889 (US-A 5225478) bekannt. Der Einsatz von Naturstoffen wie Dextrinen oder Stärkeether als Verdüsungsschutzkolloid, und der Einsatz derartiger Dispersionspulver in Klebstoffen und hydraulisch erhärtenden Bindemitteln ist aus der EP-A 134451 bekannt. Die EP-A 467103 (US-A 5342897) beschreibt die Herstellung von Dispersionspulvern durch Sprühtrocknung von Polymerdispersionen, welche wasserlösliche Copolymere von ungesättigten Säuren oder deren Anhydride und Alken oder Styrol enthalten.

Die genannten wasserlöslichen Schutzkolloide verhindern ein frühzeitiges Verfilmen der Polymerisate während der Trocknung der Dispersion und ermöglichen erst die Redispergierung (d.h. den weitgehenden Zerfall in die Primärteilchen der Basisdispersion) der trockenen Polymerpulver in Wasser. In vielen Anwendungen jedoch wirken sich die in den bekannten Dispersionspulvern eingesetzten Schutzkolloide negativ auf die Produkteigenschaften aus. Aufgrund des Schutzkolloid-Charakters der wasserlöslichen Verdüsungshilfen kann beispielsweise beim Einsatz der vorbekannten Dispersionspulver als Bindemittel in Klebstoffen, deren Klebrigkeit wegen des Anteils an Verdüsungsschutzkolloid nachteilig beeinflußt werden bzw. gänzlich zunichte gemacht werden. In Anstrichfarben und Putzen können permanent wasserlösliche Verdüsungsschutzkolloide die Wasserbeständigkeit stark beeinträchtigen.

Der Erfindung lag daher die Aufgabe zugrunde, eine in Wasser redispergierbare Dispersionspulver-Zusammensetzung zur Verfügung zu stellen, bei welcher die Wirkung des eingesetzten Verdüsungsschutzkolloids bei der Anwendung gezielt aufgehoben werden kann.

Überraschend wurde nun gefunden, daß diese Aufgabe durch den Einsatz von niedermolekularen, wasserlöslichen Polymeren auf Basis von Acrylsäure, Methacrylsäure oder Maleinsäure(anhydrid) als Verdüsungsschutzkolloid gelöst werden kann.

Gegenstand der Erfindung ist eine in Wasser redispergierbare Dispersionspulver-Zusammensetzung enthaltend
a) ein wasserunlösliches, filmbildendes Basispolymerisat mit einer Glasübergangstemperatur von -60°C bis +80°C aus der Gruppe der Homo- und Copolymerisate von Vinylestern, Acrylsäureestern, Methacrylsäureestern, Styrol und Vinylchlorid oder ein Gemisch der genannten Basispolymerisate,
b) 2 bis 40 Gew%, bezogen auf das Basispolymerisat, eines wasserlöslichen Verdüsungsschutzkolloids,
c) 0 bis 30 Gew%, bezogen auf das Gesamtgewicht polymerer Bestandteile, eines Antiblockmittels,
dadurch gekennzeichnet, daß als Komponente b) nicht-neutralisierte Homo- oder Copolymerisate von olefinisch ungesättigten Mono- oder Dicarbonsäuren oder deren Anhydride, oder teilneutralisierte Homopolymerisate von olefinisch ungesättigten Mono- oder Dicarbonsäuren oder deren Anhydriden, oder teilneutralisierte Copolymerisate von olefinisch ungesättigten Mono- oder Dicarbonsäuren oder deren Anhydriden mit einem Säuregehalt von > 80 Mol% bei Copolymeren mit C₃- bis C₁₂-Alkenen oder Styrol und einem Säuregehalt von 50 bis 99 Mol% bei den übrigen Copolymeren, enthalten sind, wobei das Molekulargewicht der gennanten Polymerisate ≤ 250 000 g/mol, bestimmt als Gewichtsmittel, und der pH-Wert der wäßrigen Redispersion der Dispersionspulver-Zusammensetzung unter 4.5 beträgt.

Als Komponente a) geeignete Vinylester-Homo- oder Copolymerisate enthalten ein oder mehrere Monomereinheiten aus der Gruppe der Vinylester von unverzweigten oder verzweigten Carbonsäuren mit 1 bis 18 C-Atomen. Geeignete (Meth)acrylsäureester-Polymerisate sind Homo- und Copolymerisate der Acrylsäure und Methacrylsäure mit unverzweigten oder verzweigten Alkoholen mit 1 bis 18 C-Atomen.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 oder 9 bis 10 C-Atomen, beispielsweise VV5^{R}, VeoVa9^{R} oder VeoVa10^{R}. Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat, 2-Ethylhexylmethacrylat. Besonders bevorzugt sind Methylacrylat, Methylmethacrylat, n-Butylacrylat und 2-Ethylhexylacrylat.

Beispiele für geeignete Vinylester-Polymerisate sind:
Vinylester-Homopolymerisate wie Vinylacetat-Homopolymerisat;
Vinylester-Ethylen-Copolymere wie Vinylacetat-Ethylen-Copolymere mit einem Ethylengehalt von 1 bis 60 Gew%;
Vinylester-Ethylen-Vinylchlorid-copolymerisate wie Vinylacetat-Ethylen-Vinylchlorid-Copolymere mit einem Ethylengehalt von 1 bis 40 Gew% und einem Vinylchlorid-Gehalt von 20 bis 80 Gew%;
Vinylacetat-Copolymere mit 1 bis 50 Gew% eines oder mehrerer copolymerisierbarer Vinylester wie Vinyllaurat, Vinylpivalat, Vinyl-2-ethylhexansäureester, Vinylester einer α-verzweigten Carbonsäure, insbesonders Versaticsäure-Vinylester (VeoVa9^{R}, VeoVa10^{R}), welche gegebenenfalls noch 1 bis 40 Gew% Ethylen enthalten;
Vinylester-Acrylsäureester-copolymerisate mit 30 bis 90 Gew% Vinylester, insbesonders Vinylacetat, und 1 bis 60 Gew% Acrylsäureester, insbesonders n-Butylacrylat oder 2-Ethylhexylacrylat, welche gegebenenfalls noch 1 bis 40 Gew% Ethylen enthalten;
Vinylester-Acrylsäureester-Copolymerisate mit 30 bis 75 Gew% Vinylacetat, 1 bis 30 Gew% Vinyllaurat oder Vinylester einer α-verzweigten Carbonsäure, insbesonders Versaticsäure-Vinylester, 1 bis 30 Gew% Acrylsäureester, insbesonders n-Butylacrylat oder 2-Ethylhexylacrylat, welche gegebenenfalls noch 1 bis 40 Gew% Ethylen enthalten;
Vinylester-Copolymerisate mit Estern der Maleinsäure oder Fumarsäure wie Diisopropyl-, Di-n-butyl, Di-t-butyl-, Diethylhexyl-, Methyl-t-butyl-Ester, beispielsweise Vinylacetat-Copolymerisate mit 10 bis 60 Gew% eines oder mehrerer der genannten Malein-/Fumarsäure-Ester, welche gegebenenfalls noch Ethylen oder weitere copolymerisierbare Vinylester wie Vinyllaurat oder Versaticsäure-Vinylester enthalten.

Beispiele für geeignete (Meth)acrylsäurepolymerisate sind:
Homopolymerisate von n-Butylacrylat oder 2-Ethylhexylacrylat;
Copolymerisate mit 35 bis 65 Gew% Methylmethacrylat, 65 bis 35 Gew% n-Butylacrylat und/oder 2-Ethylhexylacrylat.

Beispiele für Vinylchlorid-Polymerisate sind neben den obengenannten Vinylester/Vinylchlorid-Copolymerisaten Vinylchlorid-Ethylen-Copolymere.

Beispiele für Styrol-Polymerisate sind Styrol-Butadien-Copolymere und Styrol-Acrylsäureester-Copolymere wie Styrol-n-Butylacrylat oder Styrol-2-Ethylhexylacrylat mit einem Styrol-Gehalt von jeweils 1 bis 70 Gew%.

Gegebenenfalls enthalten die genannten Polymerisate noch 0.05 bis 30.0 Gew%, vorzugsweise 0.5 bis 15 Gew%, jeweils bezogen auf das Gesamtgewicht des Polymerisats, ein oder mehrere Hilfsmonomereinheiten zur Verbesserung der Wasserlöslichkeit, zur Vernetzung oder zur Modifikation der Haftungseigenschaften.

Geeignete Hilfsmonomere zur Verbesserung der Wasserlöslichkeit sind beispielsweise α,β-monoethylenisch ungesättigte Mono- und Dicarbonsäuren und deren Amide, wie Acrylsäure, Methacrylsäure, Maleinsäure, Fumarsäure, Itaconsäure, Acrylamid, Methacrylamid; ethylenisch ungesättigte Sulfonsäuren bzw. deren Salze, vorzugsweise Vinylsulfonsäure, 2-Acrylamido-propansulfonat und/oder N-Vinylpyrrolidon.

Vernetzend wirkende Monomereinheiten sind vorzugsweise zu 0.5 bis 5.0 Gew%, bezogen auf das Gesamtgewicht des Polymerisats, im Polymerisat enthalten. Beispiele hierfür sind N-Methylolacrylamid, N-Methylolmethacrylamid; N-(Alkoxymethyl)acrylamide oder N-(Alkoxymethyl)methacrylamide mit einem C₁- bis C₆-Alkylrest, wie N-(Isobutoxymethyl)-acrylamid (IBMA), N-(Isobutoxymethyl)-methacrylamid (IBMMA), N-(n-Butoxymethyl)-acrylamid (NBMA), N-(n-Butoxymethyl)-methacrylamid (NBMMA); mehrfach ethylenisch ungesättigten Comonomere wie Ethylenglycoldiacrylat, 1,3-Butylenglycoldiacrylat, 1,4-Butylenglycoldiacrylat, Propylenglycoldiacrylat, Divinyladipat, Divinylbenzol, Vinylmethacrylat, Vinylacrylat, Allylmethacrylat, Allylacrylat, Diallylmaleat, Diallylphthalat, Diallylfumarat, Methylenbisacrylamid, Cyclopentadienylacrylat oder Triallylcyanurat.

Zur Modifikation der Haftungseigenschaften geeignete Comonomereinheiten sind beispielsweise Methacrylsäure- und Acrylsäurehydroxyalkylester wie Hydroxyethyl-, Hydroxypropyloder Hydroxybutyl-acrylat oder -methacrylat sowie Verbindungen wie Diacetonacrylamid und Acetylacetoxyethylacrylat oder -methacrylat.

Die Herstellung der genannten, radikalisch polymerisierbaren, wasserunlöslichen Polymere erfolgt vorzugsweise nach dem Emulsionspolymerisationsverfahren in einem Temperaturbereich von 0 bis 100°C und wird mit den für die Emulsionspolymerisation üblicherweise eingesetzten wasserlöslichen Radikalbildnern eingeleitet. Als Dispergiermittel können alle üblicherweise bei der Emulsionspolymerisation verwendeten Emulgatoren eingesetzt werden. Die Polymerisation wird bei einem pH von vorzugsweise 2 bis 7 durchgeführt. Vor der Trocknung wird die Dispersion vorzugsweise auf einen Festgehalt von 20 bis 65 % eingestellt.

Als Komponente b) bevorzugt werden Homo- oder Copolymerisate von Acrylsäure, Methacrylsäure oder Maleinsäure(anhydrid), insbesonders Polyacrylsäure oder Polymethacrylsäure. Bevorzugt sind weiter Copolymere mit Acrylsäure-, Methacrylsäure-oder Maleinsäure(anhydrid)-Einheiten und Einheiten damit copolymerisierbarer Monomere, insbesonders unter der Maßgabe, daß der Säureanteil in diesen Copolymeren über 80 Mol% liegt. Beispiele für copolymerisierbare Monomere sind Alkene wie Ethylen, Propylen, Vinylaromaten wie Styrol, Acrylsäureester wie Butylacrylat, Methacrylsäureester wie Methylmethacrylat, Alkylvinylether wie Methylvinylether, Methacrylamid und Acrylamid. Bevorzugte Comonomere sind (Meth)acrylsäureester, Alkylvinylether und (Meth)acrylamide. Beispiele für bevorzugte Copolymere sind Maleinsäure/Methylvinylether-, Methacrylsäure/Methylmethacrylat- und Methacrylsäure/Acrylamid-Copolymere. Es können auch Gemische der genannten Homo- und Copolymerisate eingesetzt werden.

Die Molekulargewichte der genannten Polymerisate betragen ≤ 250000 g/mol, vorzugsweise ≤ 150000 g/mol; besonders bevorzugt beträgt das Molekulargewicht von 5000 bis 50000 g/mol, bestimmt als Gewichtsmittel, beispielweise mit der Gelpermeationschromatographie.

Die als Komponente b) beschriebenen Polymerisate werden üblicherweise in dem Fachmann bekannten Verfahren, beispielsweise Lösungspolymerisation oder Substanzpolymerisation, hergestellt. Vielfach sind diese Polymerisate auch im Handel erhältlich.

Der Anteil der Komponente b) in der Dispersionspulver-Zusammensetzung beträgt vorzugsweise von 2 bis 40 Gew%, besonders bevorzugt von 5 bis 25 Gew%, bezogen auf das Basispolymerisat.

Beispiele für Antiblockmittel (Komponente c) sind fein gemahlene Aluminiumsilikate, Kieselgur, pyrogen erzeugtes Siliciumdioxid, Fällungskieselsäure, kolloidales Silicagel, Micro-Silica, Kaolin, Talkum, Diatomeerde, Calciumcarbonat und Magnesiumhydrosilikate. Der Anteil des Antiblockmittels beträgt vorzugsweise 4 bis 20 Gew%, bezogen auf das Gesamtgewicht polymerer Bestandteile.

Die Dispersionspulver-Zusammensetzung kann, je nach angestrebtem Einsatzgebiet, gegebenenfalls noch weitere Zusatzstoffe enthalten.

Für die Anwendung als Klebemittel kann die Dispersionspulver-Zusammensetzung vorzugsweise noch bis zu 100 Gew%, jeweils bezogen auf das Basispolymerisat, klebrigmachende Substanzen (Tackifier) wie Kolophonium, dimerisiertes Kolophonium, hydriertes Kolophonium und/oder Ester der genannten Kolophonium-Typen; Polyterpen-Harze, Cumaron-Inden-Harze, Terpen-Phenol-Harze, Kohlenwasserstoffharze, gegebenenfalls in Kombination mit Hochsiedern wie beispielsweise Butyldiglykolacetat, Butyldiglykol, Propylendiglykol-Ether oder -Ester; Weichmacher wie Phthalsäureester, Sebazinsäureester, Adipinsäureester enthalten. Bevorzugt sind die genannten Kolophoniumarten und deren Ester sowie Butyldiglykolacetat und (2-Hydroxyethyl)phenylether.

Gegebenenfalls können auch noch 0.5 bis 20 Gew%, bevorzugt 0.5 bis 10 Gew%, bezogen auf das Basispolymerisat, Hydrophobierungsmittel, zum Beispiel auf Basis von Polysiloxanen oder Metallseifen, enthalten sein.

Weiter können noch 0.1 bis 2.0 Gew%, bevorzugt 0.1 bis 1.0 Gew%, bezogen auf das Basispolymerisat, oberflächenaktive Substanzen wie Emulgatoren oder Netzmittel enthalten sein. Beispiele hierfür sind anionische sowie nichtionische Tenside.

Gegebenenfalls können auch noch 0.5 bis 15 Gew%, vorzugsweise 0.5 bis 10 Gew%, bezogen auf das Basispolymerisat, Verdickungsmittel zum Beispiel auf Basis von hochmolekularen Polyacrylsäuren enthalten sein.

Ein weiteres Beispiel für gebräuchliche Zusatzstoffe sind Entschäumer, welche gegebenenfalls zu einem Anteil von 0.05 bis 2.0 Gew%, vorzugsweise von 0.05 bis 1.0 Gew%, bezogen auf das Basispolymerisat, eingesetzt werden können.

In einer bevorzugten Ausführungsform sind in der erfindungsgemäßen Dispersionspulver-Zusammensetzung noch Neutralisationsmittel enthalten. Vorzugsweise werden diese dem Pulver nach der Trocknung, gegebenenfalls in Kombination mit weiteren pulverförmigen Zusatzstoffen zugemischt. Die Menge des einzusetzenden Neutralisationsmittels richtet sich nach der jeweiligen Dispersionspulver-Zusammensetzung. Geeignet sind die üblichen anorganischen Basen; Beispiele hierfür sind NaOH, KOH, Ca(OH)₂.

Für die Anwendung in Baustoffen können auch noch 1.0 bis 30 Gew%, bevorzugt 1.0 bis 15 Gew%, bezogen auf das Basispolymerisat, Zementverflüssiger enthalten sein; zum Beispiel Styrol-Maleinsäureanhydrid-Copolymere, sulfonatgruppenhaltige Kondensationsprodukte aus Melamin oder Keton und Formaldehyd und/oder Naphthalinsulfonsäure-Formaldehyd- und/oder Phenolsulfonat-Formaldehyd-Kondensationsprodukte.

Zur Herstellung der Dispersionspulver-Zusammensetzung wird das Basispolymerisat a) als wäßrige Dispersion eingesetzt. Dieser Dispersion wird das Verdüsungsschutzkolloid b) vorzugsweise in Form einer wäßrigen Lösung zugesetzt und eingemischt. Diese Mischvorgänge können in beliebiger Reihenfolge ablaufen, wichtig ist nur, daß eine homogene Dispersionsmischung vorliegt. Die gegebenenfalls einzusetzenden Verdickungsmittel, oberflächenaktive Substanzen, Hydrophobierungsmittel, Entschäumer sowie gegebenenfalls weitere Zusatzstoffe werden vorzugsweise vor der Trocknung dem wäßrigen Gemisch zugegeben. Wird der Einsatz von klebrigmachenden Zusätzen (Tackifier) gewünscht, so werden diese vorzugsweise als erste Komponente der Dispersion des Basispolymerisats zugesetzt. Der Tackifier kann dabei in Lösung, in Substanz (als Feststoff oder Flüssigkeit), als Schmelze, oder als wäßrige Emulsion/Dispersion zugegeben werden. Bei Einsatz des Tackifiers in Substanz ist auf eine ausreichende Durchmischung beim Einarbeiten in die Dispersion des Basispolymerisats zu achten.

Bei Zusatz von Verdüsungsschutzkolloid b) mit einem Säureanteil > 80 Mol% liegt in der zu verdüsenden Mischung im allgemeinen ein pH unter 4.5 vor und es ist somit gewährleistet, daß das Verdüsungsschutzkolloid in nicht- oder teilneutralisierter Form vorliegt und redispergierbare Systeme ergibt. Gegebenenfalls muß der pH der Mischung vor der Verdüsung entsprechend eingestellt werden. Beispielsweise kann der geeignete pH durch überprüfung der Redispergierbarkeit an getrockneten Filmen aus wäßrigen Mischungen des Basispolymerisats mit dem Verdüsungsschutzkolloid bei unterschiedlichem pH leicht festgestellt werden.

Nach Vermischen der Komponenten wird die Dispersion getrocknet, vorzugsweise sprühgetrocknet oder gefriergetrocknet, besonders bevorzugt sprühgetrocknet. Hierbei kann auf bekannte Vorrichtungen, wie zum Beispiel Versprühen durch Mehrstoffdüsen oder mit der Scheibe in einem gegebenenfalls erhitzten Trockengasstrom zurückgegriffen werden. Im allgemeinen wird Luft, Stickstoff oder mit Stickstoff angereicherte Luft als Trockengas eingesetzt, wobei die Trockengastemperatur im allgemeinen 250°C nicht überschreitet. Die optimale Temperatur des Trockengases kann in wenigen Versuchen ermittelt werden; oft haben sich Trockengastemperaturen über 60°C besonders bewährt.

Zur Erhöhung der Lagertemperatur, beispielsweise um ein Verbacken und Verblocken zu verhindern und/oder um die Rieselfähigkeit des Pulvers zu verbessern, kann das Pulver mit einem Antiblockmittel c) versetzt werden. Dies erfolgt vorzugsweise solange das Pulver noch fein verteilt ist, zum Beispiel noch im Trockengas suspendiert ist. Insbesonders wird das Antiblockmittel getrennt aber gleichzeitig mit der Dispersion in die Trocknungsvorrichtung dosiert.

Soll die Dispersionspulver-Zusammensetzung ein oder mehrere Neutralisationsmittel enthalten, so werden diese vorzugsweise in fester Form dem Dispersionspulver zugesetzt. Die Neutralisationsmittel können aber auch getrennt aber gleichzeitig mit der Dispersion in die Trocknungsvorrichtung dosiert werden. Für diese Verfahrensvariante hat sich die Sprühtrocknung besonders bewährt.

Die Dispersionspulver-Zusammensetzung kann als solche in den nachfolgend beschriebenen Anwendungen eingesetzt werden. Üblicherweise wird die Dispersionspulver-Zusammensetzung in Trockenformulierungen eingesetzt, welche vor der Anwendung mit Wasser angerührt werden. Ferner kann die Dispersionspulver-Zusammensetzung zunächst in Wasser redispergiert werden und anschließend in Form der Redispersion mit weiteren Additiven modifiziert werden.

Aufgrund der beanspruchten Verdüsungsschutzkolloid-Komponente b) können mittels Neutralisation der Komponente b) Dispersionen mit desaktiviertem Schutzkolloid erhalten werden. Die Neutralisation kann dabei so erfolgen, daß eine Dispersionspulver-Zusammensetzung, welche bereits die entsprechende Menge an Neutralisationsmittel enthält und vorzugsweise in einer anwendungsfertigen Trockenformulierung vorliegt, in Wasser redispergiert wird, wobei die Menge an Neutralisationsmittel im Pulver so bemessen ist, daß sich der gewünschte pH-Bereich bei Redispergierung einstellt. Eine weitere Möglichkeit besteht darin, eine nicht mit Neutralisationsmittel modifizierte Dispersionspulver-Zusammensetzung oder Trockenformulierung in Wasser zu redispergieren bzw. dispergieren und den gewünschten pH-Bereich durch nachträgliche Zugabe von Neutralisationsmittel wie zum Beispiel NaOH, KOH oder Ca(OH)₂ einzustellen. Für bestimmte Anwendungen, wie beispielsweise Fußbodenkleber, kann auf die Desaktivierung des Schutzkolloids durch Neutralisation gegebenenfalls auch verzichtet werden.

Ein weiterer Gegenstand der Erfindung sind daher wäßrige Polymerdispersionen, vorzugsweise mit einem pH-Wert von 5 bis 10, erhältlich durch Redispergierung der obengenannten Dispersionspulver-Zusammensetzung oder von Trockenformulierungen mit den obengenannten Dispersionspulver-Zusammensetzungen in Wasser, gegebenenfalls unter Einstellen des pH-Wertes. Der Festgehalt der Dispersionen hängt ab von der beabsichtigten Anwendung und beträgt im allgemeinen von 10 bis 80 %.

Die erfindungsgemäßen Dispersionspulver-Zusammensetzungen und die damit erhältlichen wäßrigen Dispersionen eignen sich besonders zum Einsatz in Klebstoff-Zusammensetzungen, insbesonders in Haftklebemitteln und Fußbodenklebstoffen. Ferner eignen sich die Pulver und Dispersionen als Bindemittel in Putzen, Farben und Beschichtungen (z.B. Dichtungsschlämme), als Bindemittel in zementfreien und zementhaltigen Spachtelmassen, als Baukleber sowie als Bindemittel für Klebstoffe oder Beschichtungen in der Textilanwendung.

Im Unterschied zu Dispersionspulvern oder daraus erhältlichen wäßrigen Dispersionen, welche nicht-desaktivierbare Schutzkolloide enthalten, werden mit den erfindungsgemäßen Systemen Formulierungen zugänglich, in denen die vorteilhaften Eigenschaften des Basispolymerisats, beispielsweise bezüglich Klebrigkeit (Tack), Wasserbeständigkeit, mechanischer Festigkeit, nicht durch den negativen Einfluß des Verdüsungsschutzkolloids ganz- oder teilkompensiert werden, sondern voll zum Tragen kommen. Überraschenderweise werden damit pulverförmige Klebemittel oder Klebemitteldispersionen zugänglich, welche auch ohne den Zusatz von Tackifier die für Haftkleber erforderliche Klebrigkeit aufweisen.

Die nachfolgenden Beispiele dienen zur weiteren Erläuterung der Erfindung.

### BEISPIELE:

### Verwendete Substanzen:

### Dispersion DI-1:

Emulgatorstabilisierte wäßrige Dispersion mit einem Festgehalt von 60 % auf der Basis eines Vinylacetat-Ethylen-Ethylhexylacrylat-Copolymeren mit einem 2-Ethylhexylacrylatgehalt von 48 Gew%, einem Vinylacetat-Gehalt von 36 Gew% und einem Ethylengehalt von 16 Gew% der Wacker-Chemie GmbH.

### Dispersion DI-2:

Emulgatorstabilisierte wäßrige Dispersion mit einem Festgehalt von 61 % auf der Basis eines Vinylacetat-Ethylen-Copolymeren mit einem Ethylen-Gehalt von 45 Gew% und einem Vinylacetat-Gehalt von 55 Gew% der Wacker-Chemie GmbH.

### Dispersion DI-3:

Emulgatorstabilisierte wäßrige Dispersion mit einem Festgehalt von 51 % auf der Basis eines Vinylacetat-Ethylen-Copolymeren mit einem Ethylengehalt von 12 Gew% und einem Vinylacetat-Gehalt von 88 Gew% der Wacker-Chemie GmbH.

### Dispersion DI-4:

Emulgatorstabilisierte wäßrige Dispersion mit einem Festgehalt von 60% auf der Basis eines 2-Ethylhexylacrylat-Vinylacetat-Copolymeren mit einem 2-Ethylhexylacrylatgehalt von 90 Gew% und einem Vinylacetatgehalt von 10 Gew% der Wacker-Chemie GmbH.

### Verdüsungsschutzkolloid Sokalan-CP13:

Sokalan CP13 ist eine Polyacrylsäure mit einem Molekulargewicht von ca. 20000 der Fa. BASF.

### Verdüsungsschutzkolloid Versicol-Kll:

Versicol-Kll ist eine Polymethacrylsäure mit einem Molekulargewicht von ca. 10000 der Fa. Allied Colloids.

### Tackifier T-1:

Der Tackifier T-1 ist eine Mischung aus 20 Gew% Plastilit-DS3431, (2-Hydroxyethyl)-phenylether der Fa. BASF, und 80 Gew% eines mittelamerikanischen Balsamharzes Typ Maya der Fa. Willers, Engel & Co.

### Beispiel 1:

4000 Gew.Teile Dispersions D-1, 1920 Gew.Teile Versicol-Kll als 25 %-ige wäßrige Lösung (20 % auf DI-1-Harz) und 1050 Gew.Teile Wasser wurden gründlich gemischt. Der pH-Wert der Dispersion betrug 3,4. Die Mischung wurde mittels einer Zweistoffdüse sprühgetrocknet. Als Verdüsungskomponente diente auf 3 bar vorgepreßte Luft; die gebildeten Tröpfchen wurden mit auf 120°C erhitzter Trocknungsluft im Gleichstrom getrocknet. Das erhaltene trockene Pulver wurde mit 10 Gew% eines handelsüblichen Antiblockmittels auf Kaolin-Basis abgemischt.

### Vergleichsbeispiel 1:

Die Herstellung des Dispersionspulvers erfolgte gemäß Beispiel 1, jedoch wurde der pH des Verdüsungsansatzes durch Zugabe von NaOH auf pH 5,2 erhöht.

### Beispiel 2:

2000 Gew.Teile Dispersion DI-1 und 1200 Gew.Teile Tackifier T-1 (100 % auf DI-1-Harz) wurden homogen gemischt. Anschließend wurden 1907 Gew.Teile Versicol-K11 (20 % auf DI-1-Harz und Tackifier T-1) als 25 %-ige wäßrige Lösung und 1000 Gew.Teile Wasser gründlich eingemischt. Der pH-Wert der Mischung betrug 2,8. Die Mischung wurde mittels einer Zweistoffdüse sprühgetrocknet. Als Verdüsungskomponente diente auf 3 bar vorgepreßte Luft; die gebildeten Tropfen wurden mit auf 120°C erhitzter Trocknungsluft im Gleichstrom getrocknet. Das erhaltene Pulver wurde mit 10 % eines handelsüblichen Antiblockmittels auf Kaolin-Basis abgemischt.

### Vergleichsbeispiel 2:

Die Herstellung des Dispersionspulvers erfolgte gemäß Beispiel 2, jedoch wurde der pH des Verdüsungsansatzes mit NaOH auf pH 5,6 erhöht.

### Vergleichsbeispiel 3:

Es wurde wie in Beispiel 1 gearbeitet, jedoch statt 1920 Gew.Teilen einer 25 %-igen wäßrigen Versicol-K11-Lösung wurden nur 1440 Gew.Teile (15 % auf DI-1-Harz) eingesetzt. Der pH-Wert der Mischung betrug 3,6.

### Beispiel 3:

4000 Gew.Teile Dispersion DI-4, 1920 Teile Versicol-Kll als 25%-ige wäßrige Lösung (20% auf DI-4-Harz) und 950 Gew.Teile Wasser wurden gründlich gemischt. Der pH-Wert der Mischung betrug 3,4. Die Sprühtrocknung erfolgte analog zu Beispiel 1. Das erhaltene trockene Pulver wurde mit 10% eines handelsüblichen Antiblockmittels auf Kaolin-Basis abgemischt.

### Beispiel 4:

4000 Gew.Teile Dispersion DI-2, 1743 Gew.Teile Sokalan-CP13 als 28 %-ige wäßrige Lösung (20 % auf DI-2-Harz) und 1500 Gew.Teile Wasser wurden gründlich gemischt. Der pH-Wert der Mischung betrug 2,6. Die Mischung wurde mittels einer Zweistoffdüse sprühgetrocknet. Die Herstellung des Dispersionspulvers erfolgte gemäß Beispiel 1. Auf den Einsatz eines Antiblockmittels wurde verzichtet.

### Beispiel 5:

4000 Gew.Teile Dispersion DI-3 und 729 Gew.Teile Sokalan-CP13 als 28 %-ige wäßrige Lösung (10 % auf DI-3-Harz) wurden gründlich gemischt. Der pH-Wert der Mischung betrug 2,2. Die Herstellung des Dispersionspulvers erfolgte gemäß Beispiel 1. Auf den Einsatz eines Antiblockmittels wurde verzichtet.

### Beispiel 6:

Es wurde wie in Beispiel 5 gearbeitet, jedoch statt 729 Gew.Teilen einer 28 %-igen wäßrigen Sokalan-CP13-Lösung wurden 816 Gew.Teile einer 25%igen Lösung von Versicol-Kll (10 % auf DI-3-Harz) eingesetzt. Der pH-Wert der Mischung betrug 2,4.

### Anwendungstechnische Untersuchungen:

### Desaktivierung des Verdüsungsschutzkolloids:

Zur Untersuchung der Desaktivierung des Verdüsungsschutzkolloids wurde der Einfluß des pH-Werts der zu verdüsenden Dispersion auf die Redispergierbarkeit der daraus erhältlichen Dispersionspulver untersucht. Dazu wurden 50 g des jeweiligen Dispersionspulvers in 50 g Wasser eingerührt und die Redispergierbarkeit im Röhrenabsitztest mittels einer graduierten Glasröhre qualitativ bewertet. Tabelle 1 zeigt, wie durch Neutralisation des Schutzkolloids dieses desaktiviert wird und durch einfache pH-Änderung aus redispergierbaren Systemen nicht redispergierbare werden.

**Tabelle 1:**

| Dispersionspulver | pH des Verdüsungsansatzes | Redispergierbarkeit des Dispersionspulver |
|---|---|---|
| Beispiel 1 | 3,4 | gut |
| Vergl.bsp. 1 | 5,2 | schlecht |
| Beispiel 2 | 2,8 | gut |
| Vergl.bsp. 2 | 5,6 | schlecht |
| Beispiel 5 | 2,2 | sehr gut |
| Vergl.bsp. 3 | 5,3 | schlecht |

Verbesserung der anwendungstechnischen Eigenschaften bei Desaktivierung des Verdüsungsschutzkolloids:

Zur Untersuchung der Beeinflußung anwendungstechnischer Eigenschaften durch die Desaktivierung des Verdüsungsschutzkolloids wurde der Einfluß des pH-Werts der Redispersion auf den Tack von damit hergestellten Haftklebefilmen untersucht. Dazu wurden 50 g des jeweiligen Dispersionspulvers in 50 g Wasser eingerührt und durch Zugabe von NaOH der in Tabelle 2 angegebene pH-Wert eingestellt. Als Vergleich wurden die Redispersionen jeweils nicht neutralisiert. Die Redispersionen wurden auf eine Träger-Folie aufgerakelt und bei 60°C getrocknet. Die Filmklebrigkeit (Tack) wurde qualitativ bewertet. Tabelle 2 zeigt, wie durch Neutralisation des Schutzkolloids dieses desaktiviert wird und die Filmklebrigkeit bei ansonsten gleichen Dispersionen durch die Neutralisation des Schutzkolloids drastisch verbessert wird.

**Tabelle 2:**

| Pulver | pH der Redispersion | Neutralisationsmittel | eingestellter pH | Tack |
|---|---|---|---|---|
| Bsp. 1 | 3,6 | NaOH | 6,8 | hoch |
| Bsp. 1 | 3,6 | - - - | 3,6 | sehr gering |
| Bsp. 2 | 3,1 | NaOH | 7,2 | sehr hoch |
| Bsp. 2 | 3,1 | - - - | 3,1 | gering |
| Bsp. 3 | 3,4 | NaOH | 7,0 | hoch |
| Bsp. 3 | 3,4 | - - - | - - | gering |
| Bsp. 4 | 2,8 | NaOH | 7,0 | hoch |
| Bsp. 4 | 2,8 | - - - | 2,8 | gering |

### Testung in Pulverfarben-Rezeptur:

Es wurden Pulverfarben gemäß der in Tabelle 3 angegebenen Rezepturen hergestellt:

**Tabelle 3:**

| Pulverfarbenrezeptur | | | |
|---|---|---|---|
| Bezeichnung | Rezeptur A [g] | Rezeptur B [g] | Rezeptur C [g] |
| Calcit (1-6 µm, ÖZ 22) | 128,5 | - - - | - - - |
| Talkum (3 µm, ÖZ 53) | 148,0 | 148,0 | 148,0 |
| TiO₂ (Kronos 2190) | 73,5 | 73,5 | 73,5 |
| Talkum (8 µm, ÖZ 35) | 63,5 | 63,5 | 63,5 |
| Cellulosefasern | 16,0 | 16,0 | 16,0 |
| Aluminiumsilicat | 12,0 | 12,0 | 12,0 |
| modifizierte Hydroxy-Cellulose | 3,0 | 3,0 | 3,0 |
| Ca(OH)₂ | 3,0 | 3,0 | - - - |
| Entschäumer | 1,5 | 1,5 | 1,5 |
| Kaolin (<5µm, ÖZ48) | - - - | 128,5 | 128,5 |
| (ÖZ = Ölzahl, µm = Mittlere Teilchengröße;) | | | |

Aus den in Tabelle 4 angegebenen Pulvern und der in Tabelle 3 angegebenen Rezeptur wurden Pulverfarben mit der in Tabelle 4 angegebenen PVK hergestellt. Die Trockenmischung wurde mit einem Dissolver in Wasser eingearbeitet. Die dabei erhaltene flüssige Farbe wurde so aufgezogen, daß eine Trockenschichtdicke von ca. 100µm erreicht wurde. Nach einer 28 tägigen Normklimalagerung wurde die Naßabriebsbeständigkeit gemäß DIN 53778 ermittelt.

Tabelle 4 zeigt, wie durch Neutralisation des Schutzkolloids dieses desaktiviert wird und das Pigmentbindevermögen von Anstrichfarben-Rezepturen bei Einsatz von ansonsten identischen Redispersionen durch die Neutralisation des Schutzkolloids drastisch verbessert wird.

**Tabelle 4:**

| Pulverfarben-Testung | | | | | |
|---|---|---|---|---|---|
| Pulver | pH der Redispersion | Rezeptur | PVK | pH der Farbe | Naßabrieb* |
| Bsp. 5 | 2,8 | A | 69 | 7,8 | > 5000 |
| Vbsp.3 | 5,5 | A | 69 | 9,0 | 145 |
| Bsp. 7 | 2,7 | A | 69 | 7,6 | 2800 |
| Bsp. 6 | 2,8 | C | 78 | 5,7 | 390 |
| Bsp. 6 | 2,8 | B | 78 | 11,5 | 1085 |
| C = Rezeptur ohne Neutralisationsmittel | | | | | |

| | | | | | |
|---|---|---|---|---|---|
| * Scheuerzyklen nach 28 Tagen Normklimalagerung | | | | | |

## Patentansprüche

1. Redispergierbare Dispersionspulver-Zusammensetzung enthaltend
a) ein wasserunlösliches Basispolymerisat mit einer Glasübergangstemperatur von -60°C bis +80°C aus der Gruppe der Homo- und Copolymerisate von Vinylestern, Acrylsäureestern, Methacrylsäureestern, Styrol und Vinylchlorid oder ein Gemisch der genannten Basispolymerisate,
b) 2 bis 40 Gew%, bezogen auf das Basispolymerisat, eines wasserlöslichen Verdüsungsschutzkolloids,
c) 0 bis 30 Gew%, bezogen auf das Gesamtgewicht polymerer Bestandteile, eines Antiblockmittels,
dadurch gekennzeichnet, daß als Komponente b) nicht-neutralisierte Homo- oder Copolymerisate von olefinisch ungesättigten Mono- oder Dicarbonsäuren oder deren Anhydride, oder teilneutralisierte Homopolymerisate von olefinisch ungesättigten Mono- oder Dicarbonsäuren oder deren Anhydriden, oder teilneutralisierte Copolymerisate von olefinisch ungesättigten Mono- oder Dicarbonsäuren oder deren Anhydriden mit einem Säuregehalt von > 80 Mol% bei Copolymeren mit C₃- bis C₁₂-Alkenen oder Styrol und einem Säuregehalt von 50 bis 99 Mol% bei den übrigen Copolymeren, enthalten sind, wobei das Molekulargewicht der genannten Polymerisate ≤ 250000 g/mol, bestimmt als Gewichtsmittel, und der pH-Wert der wäßrigen Redispersion der Dispersionspulver-Zusammensetzung unter 4.5 beträgt.

2. Redispergierbare Dispersionspulver-Zusammensetzung nach Anspruch 1, dadurch gekennzeichnet, daß als Komponente b) Homo- oder Copolymerisate von Acrylsäure, Methacrylsäure oder Maleinsäure(anhydrid), insbesonders Polyacrylsäure, Polymethacrylsäure oder Copolymere mit Acrylsäure-, Methacrylsäure- oder Maleinsäure(anhydrid)-Einheiten und Einheiten damit copolymerisierbarer Monomere mit einem Säureanteil in diesen Copolymeren über 80 Mol%, enthalten sind.

3. Redispergierbare Dispersionspulver-Zusammensetzung nach Anspruch 1 bis 2, dadurch gekennzeichnet, daß die Dispersionspulver-Zusammensetzung noch bis zu 100 Gew%, bezogen auf das Basispolymerisat, klebrigmachende Substanzen (Tackifier) enthält.

4. Redispergierbare Dispersionspulver-Zusammensetzung nach Anspruch 1 bis 3, dadurch gekennzeichnet, daß die Dispersionspulver-Zusammensetzung noch Neutralisationsmittel wie NaOH, KOH, Ca(OH)₂ enthält.

5. Wäßrige Polymerdispersionen erhältlich durch Redispergierung von Dispersionspulver-Zusammensetzungen gemäß Anspruch 1 bis 4 oder von Trockenformulierungen mit Dispersionspulver-Zusammensetzungen gemäß Anspruch 1 bis 4 in Wasser mit einem pH-Wert unter 4.5 gegebenenfalls unter Einstellen eines pH-Wertes von 5 bis 10.

6. Verwendung der Dispersionspulver-Zusammensetzungen gemäß Anspruch 1 bis 4 in Klebstoff-Zusammensetzungen, insbesonders in Haftklebemitteln und Fußbodenklebstoffen, als Bindemittel in Putzen, Farben und Beschichtungen, als Bindemittel in zementfreien und zementhaltigen Spachtelmassen, als Baukleber sowie als Bindemittel für Klebstoffe oder Beschichtungen in der Textilanwendung.

7. Verwendung der wäßrigen Polymerdispersion gemäß Anspruch 5 in Klebstoff-Zusammensetzungen, insbesonders in Haftklebemitteln und Fußbodenklebstoffen, als Bindemittel in Putzen, Farben und Beschichtungen, als Bindemittel in zementfreien und zementhaltigen Spachtelmassen, als Baukleber sowie als Bindemittel für Klebstoffe oder Beschichtungen in der Textilanwendung.

## Claims

1. Redispersible dispersion powder composition comprising
a) a water-insoluble base polymer having a glass transition temperature of -60°C to +80°C from the group consisting of homo- and copolymers of vinyl esters, acrylic acid esters, methacrylic acid esters, styrene and vinyl chloride, or a mixture of the base polymers mentioned,
b) 2 to 40% by weight, based on the base polymer, of a water-soluble atomizing protective colloid, and
c) 0 to 30% by weight, based on the total weight of polymeric constituents, of an antiblocking agent,
characterized in that it comprises, as component b), non-neutralized homo- or copolymers of olefinically unsaturated mono- or dicarboxylic acids or anhydrides thereof, or partly neutralized homopolymers of olefinically unsaturated mono- or dicarboxylic acids or anhydrides thereof, or partly neutralized copolymers of olefinically unsaturated mono- or dicarboxylic acids or anhydrides thereof having an acid content of > 80 mol% in the case of copolymers with C₃- to C₁₂-alkenes or styrene and an acid content of 50 to 99 mol% in the case of the other copolymers, the molecular weight of the polymers mentioned being ≤ 250,000 g/mol, determined as the weight-average, and the pH of the aqueous redispersion of the dispersion powder composition being less than 4.5.

2. Redispersible dispersion powder composition according to Claim 1, characterized in that it comprises, as component b), homo- or copolymers of acrylic acid, methacrylic acid or maleic acid (anhydride) , in particular polyacrylic acid, polymethacrylic acid or copolymers with acrylic acid, methacrylic acid or maleic acid (anhydride) units and units of monomers which can be copolymerized with these with an acid content in these copolymers of more than 80 mol%.

3. Redispersible dispersion powder composition according to Claims 1 to 2, characterized in that the dispersion powder composition also comprises up to 100% by weight, based on the base polymer, of tackifying substances (tackifiers).

4. Redispersible dispersion powder composition according to Claims 1 to 3, characterized in that the dispersion powder composition also comprises neutralizing agents, such as NaOH, KOH or Ca(OH)₂.

5. Aqueous polymer dispersions obtainable by redispersion of dispersion powder compositions according to Claims 1 to 4 or of dry formulations with dispersion powder compositions according to Claims 1 to 4 in water having a pH of less than 4.5, if appropriate establishing a pH of 5 to 10.

6. Use of the dispersion powder compositions according to Claims 1 to 4 in adhesive compositions, in particular in pressure-sensitive adhesive compositions and flooring adhesives, as binders in plasters, paints and coatings, as binders in cement-free and cement-containing stopping compositions, as building adhesives and as binders for adhesives or coatings in textile use.

7. Use of the aqueous polymer dispersion according to Claim 5 in adhesive compositions, in particular in pressure-sensitive adhesives and flooring adhesives, as a binder in plasters, paints and coatings, as a binder in cement-free and cement-containing stopping compositions, as a building adhesive and as a binder for adhesives or coatings in textile use.

## Revendications

1. Composition de poudre de dispersion redispersable contenant
a) un polymère de base insoluble dans l'eau présentant une température de transition vitreuse de -60°C à +80°C du groupe des homopolymères et copolymères d'esters de vinyle, d'esters d'acide acrylique, d'esters d'acide méthacrylique, de styrène et de chlorure de vinyle ou un mélange des polymères de base cités;
b) 2 à 40% en poids, sur base du polymère de base, d'un colloïde protecteur pour atomisation soluble dans l'eau;
c) 0 à 30% en poids, sur base du poids total des constituants polymères, d'un agent antiblocage.
caractérisée en ce qu'elle contient comme composant b) des homopolymères ou des copolymères non neutralisés d'acides monocarboxyliques ou dicarboxyliques oléfiniquement insaturés ou leurs anhydrides, ou des homopolymères partiellement neutralisés d'acides monocarboxyliques ou dicarboxyliques oléfiniquement insaturés ou leurs anhydrides, ou des copolymères partiellement neutralisés d'acides monocarboxyliques ou dicarboxyliques oléfiniquement insaturés ou leurs anydrides avec une teneur en acide > 80% en mole pour des copolymères avec des alcènes en C₃ à C₁₂ ou du styrène et une teneur en acide de 50 à 99% en mole pour les copolymères restants, le poids moléculaire des polymères cités étant ≤ 250 000 g/mole, déterminé comme moyenne en poids, et le pH de la redispersion aqueuse de la composition de poudre de dispersion étant inférieur à 4,5.

2. Composition de poudre de dispersion redispersable suivant la revendication 1, caractérisée en ce qu'elle contient comme composant b) des homopolymères ou des copolymères d'acide acrylique, d'acide méthacrylique ou d'acide maléique (anydride), en particulier le poly(acide acrylique), le poly(acide méthacrylique) ou des copolymères avec des unités d'acide acrylique, d'acide méthacrylique ou d'acide maléique (anydride) et des unités de monomères copolymérisables avec ceux-ci avec une proportion en acide dans ces copolymères supérieure à 80% en mole.

3. Composition de poudre de dispersion redispersable suivant les revendications 1 à 2, caractérisée en ce que la composition de poudre de dispersion contient encore jusqu'à 100% en poids, sur base du polymère de base, de substances rendant collant (adhésif).

4. Composition de poudre de dispersion redispersable suivant les revendications 1 à 3, caractérisée en ce que la composition de poudre de dispersion contient encore des agents de neutralisation comme NaOH, KOH, Ca(OH)₂.

5. Dispersions polymères aqueuses pouvant être obtenues par redispersion de compositions de poudre de dispersion suivant les revendications 1 à 4 ou de formulations sèches avec des compositions de poudre de dispersion suivant les revendications 1 à 4 dans l'eau, avec un pH inférieur à 4,5, le cas échéant par ajustement d'un pH de 5 à 10.

6. Utilisation des compositions de poudre de dispersion suivant les revendications 1 à 4 dans des compositions adhésives, en particulier dans des agents auto-adhésifs et des matières adhésives pour planchers, comme liants dans des crépis, des peintures et des revêtements, comme liants dans des mastics contenant du ciment ou n'en contenant pas, comme colles de construction ainsi que comme liants pour adhésifs ou revêtements dans l'application textile.

7. Utilisation de la dispersion polymère aqueuse suivant la revendication 5 dans des compositions adhésives, en particulier dans des agents auto-adhésifs et des matières adhésives pour planchers, comme liants dans des crépis, des peintures et des revêtements, comme liants dans des mastics contenant du ciment ou n'en contenant pas, comme colles de construction ainsi que comme liants pour adhésifs ou revêtements dans l'application textile.
